(19) **Europäisches Patentamt**

**European Patent Office**

**Office européen des brevets**

(11) Publication number : **0 374 984 B1**

(12) # EUROPEAN PATENT SPECIFICATION

(45) Date of publication of patent specification :
09.09.92 Bulletin 92/37

(51) Int. Cl.[5] : **E21B 47/00, G01V 1/40**

(21) Application number : **89202711.1**

(22) Date of filing : **27.10.89**

(54) **Process for predicting the performance quality of an oil bore hole cementation and evaluating this performance.**

(30) Priority : **21.12.88 FR 8816938**

(43) Date of publication of application :
**27.06.90 Bulletin 90/26**

(45) Publication of the grant of the patent :
**09.09.92 Bulletin 92/37**

(84) Designated Contracting States :
**DE GB IT NL**

(56) References cited :
**SOCIETY OF PETROLEUM ENGINEERS, paper no. 16139, prepared for presentation at the 1987 SPE/IADC DRILLING CONFERENCE, NewOrleans, LA, 15th - 18th March 1987, pages 763-772, SPE/IADC, Richardson, Texas, US; J.J. JUTTEN et al.: "Relationship betweencement bond log output and borehole geometrical parameters"**

(56) References cited :
**SOCIETY OF PETROLEUM ENGINEERS, paper no. 16652, prepared for presentation at the 62nd ANNUAL TECHNICAL CONFERENCE ANDEXHIBITION OF THE SOCIETY OF PETROLEUM ENGINEERS, Dallas, Texas, 27th - 30th September 1987, pages 33-42, SPE, Richardson, Texas,US; J.J. JUTTEN et al.: "Relationship between cement slurry composition, mechanical properties, and cement bond log output"**
**SOCIETY OF PETROLEUM ENGINEERS, paper no. 18028, prepared for presentation at the 63RD ANNUAL TECHNICAL CONFERENCE ANDEXHIBITION OF THE SOCIETY OF PETROLEUM ENGINEERS, Houston, Texas, 2nd - 5th October 1988, pages 113-124, SPE, Richardson, Texas,US; J.J. JUTTEN et al.: "Studies with narrow cement thicknesses lead to improved CBL in concentric casings"**

(73) Proprietor : **PUMPTECH N.V.**
**Atlantic House Noorderlaan 147 Bus 5C**
**B-2030 Antwerpen (BE)**
(84) **DE GB IT NL**

(72) Inventor : **Jutten, Jacques**
**16, Allée des Acacias**
**F-42160 Saint-Cyprien (FR)**

(74) Representative : **Richebourg, Michel**
**Dowell Schlumberger Z.I. Molina Chazotte**
**F-42000 Saint-Etienne (FR)**

**EP 0 374 984 B1**

## Description

The present invention concerns the field of oil, gas, or water, geothermic, injection or production bore hole cementation, or the like.

It is known that, after boring a hole, for instance for oil or gas, a metallic tubing is lowered before cementing the ring-shaped zone thus created between the rock and the tubing. The cement has the functions of preventing a collapse of a bore hole under the rock pressure and to insulate the various underground formation zones.

It is known that the cement slag is injected through the inside of the tubing (behind an inert fluid) towards the bottom of the bore hole, after which the cement raises in the ring-shaped zone and flushes the drilling mud. Obviously, the quantity of cement slag is computed in such a way that the inside of the tubing is not cemented (in this tubing, the inert fluid is placed).

Those techniques, as well as the many related products and compositions, are perfectly known to those skilled in the art.

The problems encountered at the time of enacting these techniques also are well known.

In particular, it may happen, at some places in the bore hole, that cementation is not perfect as a result of an imperfect movement of mud, of an unforecast fluid loss towards a very permeable or fractured underground formation, of a tubing asymetry etc..

Now, it is extremely important that cementation is as perfect as possible on the whole useful height of the bore hole to avoid any "weak point" or "communication" in the cemented ring-shaped zone.

It thus is completely usual, after a cementation operation, to check the cement quality over the whole useful height of the bore hole by means of a well known bottom tool which is lowered into the tubing.

This tool analyses the propagation and attenuation of (very generally acoustic) waves and produces an answer curve called "logging" (or more commonly "log") the analysis of which by an expert allows detection of the zones where, for some reason, there exists a weak point in the cement : mud pocket, poor cement/rocks or cement/tubing bond, etc. This curve is commonly called "CBL" ("Cement Bound Log" or cementation quality curve).

The expert then recommends a second cementation process of those zones ("repair").

All of those operations are absolutely known in all their details and it is useless to explain them here in a more detailed fashion (see SPE 16 652, 1987)

It is also known that secondary effects as well as parameters that cannot up to now be usefully treated can affect the precision of the log. This is absolutely unavoidable in view of the nature of operations which are conceived and controlled from the surface, but which take place at the bottom of a hole in conditions which, obviously, cannot be 100% guaranteed.

It thus can happen that some log anomalies cannot be correctly interpreted, which, for instance, might lead to recommending for reasons of safety cementation curing processes, some of which can in fact be useless.

Since each of those secondary or curing cementation processes is extremely costly for the bore hole operator (delay in production, cost of operation itself, etc.), it is easy to conceive the enormous interest which would be presented by a process allowing to predict with precision the log that should be obtained after cementation taking into account all available parameters of the operation and of the bore hole.

Namely, such a "predictive" log would allow, by comparison with the "actual" log obtained after cementation, to locate the zones where there really exists a weak point in the cementation, without the possibility of the log interpretation being mislead by the unavoidable "secondary effects" mentioned above, (or only in a minimal proportion ).

This interest of course was perceived for the last 20 or 30 years, but the factors able to influence the log are so many, so complex, and sometimes so uncertain, that no predicting log exists up to this date.

The invention allows reaching that object.

It was demonstrated that the attenuation of acoustic waves emitted (then collected) by the tool allowing the cementation log (CBL) tracing is a direct function of the cement acoustic impedance (see SPE 16 652).

It also was shown that the thickness of the cement at a given point is one of the most critical factors.

It shall be recalled that the acoustic impedance Z of the cement is the product of the density $\rho$ of the cement by the propagation speed of the acoustic impulse in the cement (UPV), i.e. the compression waves speed in the cement.

Reference can also be made to the documents SPE 16 139 and 18 028.

A crucial step has consisted in managing correlating Z, with an excellent approximation, with some of the very many parameters of the cement, the bore hole, the underground formations, and with the elapsed time (tc) between the time where the cementation has been performed and the time where the cementation log is traced.

The major problem was to obtain a good approximation in spite of the number and complexity of the parameters, and the imprecision which compusorily affects some them, and to manage that this approximation can be used to reach the object of the invention.

An approximation was chosen which is rendered by the following equation :

$$Z_c = K \times \rho_c \times \frac{X + a}{bX + c} \qquad (I)$$

Z = theoretical acoustic impedance of the cement = ρ.UPV

K = f (tc, cement set up time (TT), temperature)

$\rho_c$ = cement density (kg/$\ell$) computed for the enacting of the cementation operation

X = P (cement slag porosity) x Y (slag volume obtained from a cement bag, i.e. 94 pounds or about 43 kg)

a, c : are constants established by the approximation.

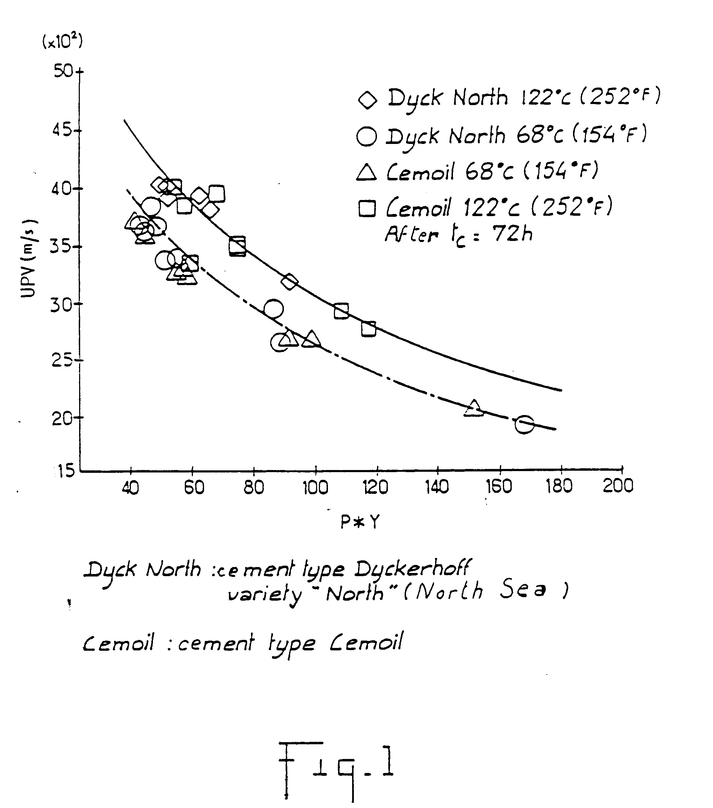

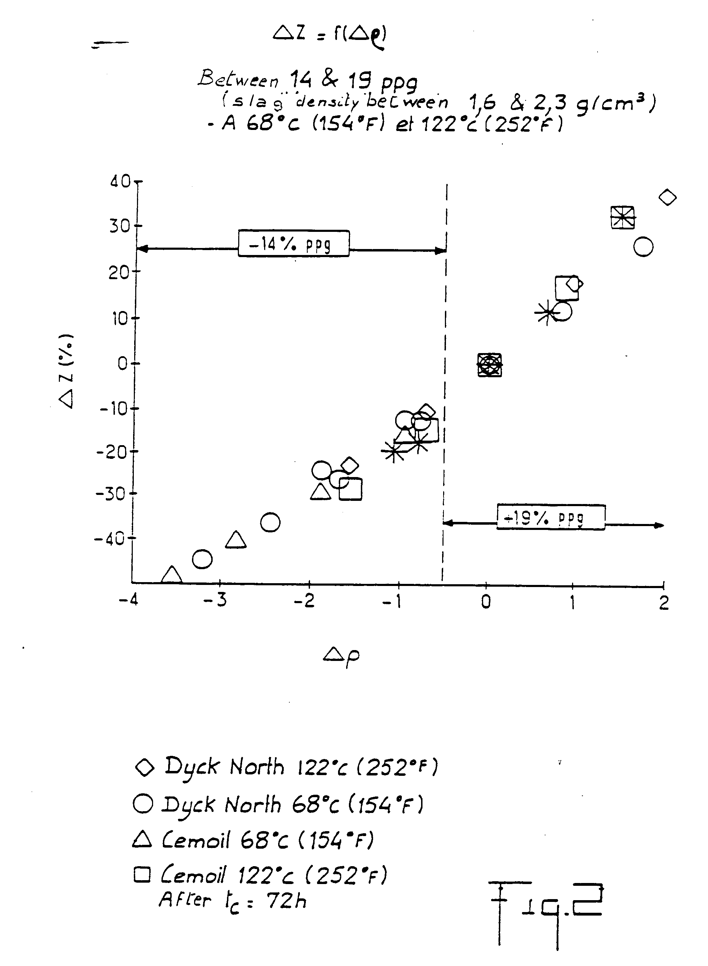

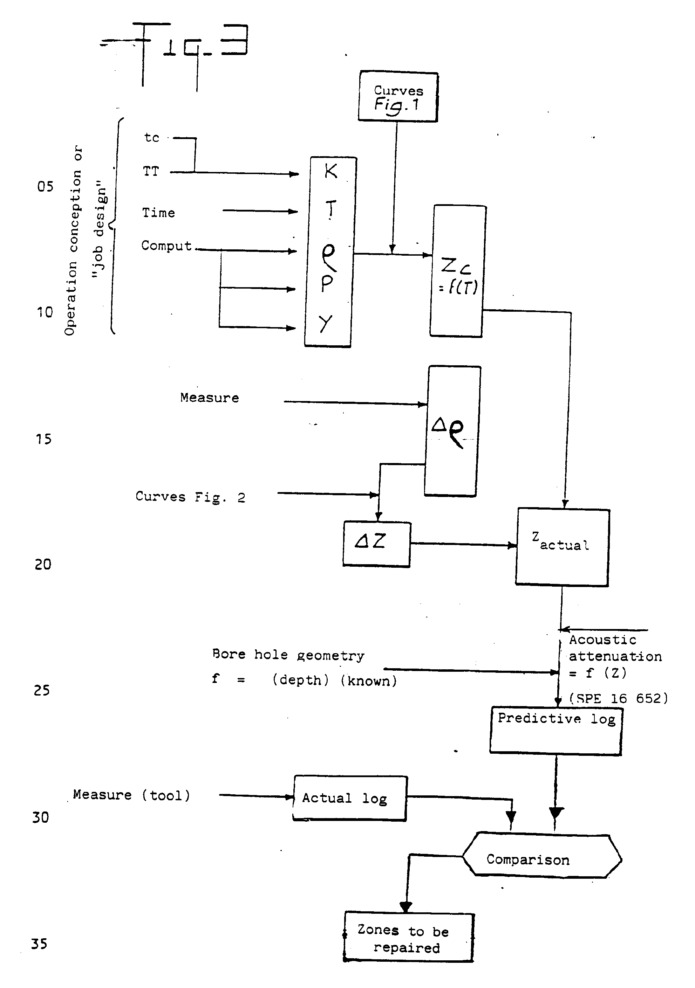

The appended figure 1 illustrates the curves obtained for two different cement types at two different temperatures.

It is quite surprising to ascertain that it was possible to reach an approximation which is 1) independant from the cement type (which obviously is an absolute imperative for a possible usage on the various oil fields in the world, where different cement types compulsorily are used as a function of the supply sources, of climatic conditions, etc.) and 2) that can be used (see below) as a starting point for the predictive log, which is the object of the invention.

Finally, the second crucial step of the invention, in combination with the previous step Z = f (ρ,X), consisted in discovering that there exists a relationship again independant from the cement type and, further, independant from the temperature between $\Delta Z$ and $\Delta \rho$ where

$\Delta \rho$ = difference between $\rho_c$ forecast at the time of the cementation operation conception ("job design") and $\rho_m$ measured in real time during cementation; and

$\Delta Z$ = difference between $Z_c$ computed from $\rho_c$ and $Z_m$ computed from $\rho_m$ (by equation (I) above).

Although the oil cements present large and well known differences according to their type, their brand, etc, it can be seen on the appended figure 2 that the relationship $\Delta z = f (\Delta \rho)$ can be represented by two rectilinear segments, independently from the temperature and the cement type.

Since $\Delta \rho$ can be accessed by real time recording of the actual density during cementation by means of a data acquisition apparatus ("PACR"), the relationship represented on figure 2 allows accessing to $\Delta z$ and consequently correcting the z value approximately computed from the formula (I) on the basis of the theoretical cementation parameters.

The actual value of Z can thus be accessed.

On the other hand, the correlation between $\Delta \rho$ and the bore hole depth is known, by taking into account the bore hole geometry (diameter, etc.) which is known and the pumping flow as a function of time, which also is known by surface measure.

$Z_{actual}$ = f (depth), can thus be accessed, i.e. (since it is known that the acoustic attenuation is a function of the impedance) the "predictive" cementation "log" CBL (the log should be obtained, after taking into account all important parameters thanks to the above steps) can be accessed to, if the cementation quality is perfect.

When this predictive log is compared with the actual log obtained by measure in the bore hole by a known bottom tool, it is possible to locate without error the zones where a second repair cementation, potentially, really is necessary.

It thus is possible to avoid secondary cementation at locations in the bore hole where, in the previous logs, the unforecast and unavoidable secondary elements could induce a mis-interpretation.

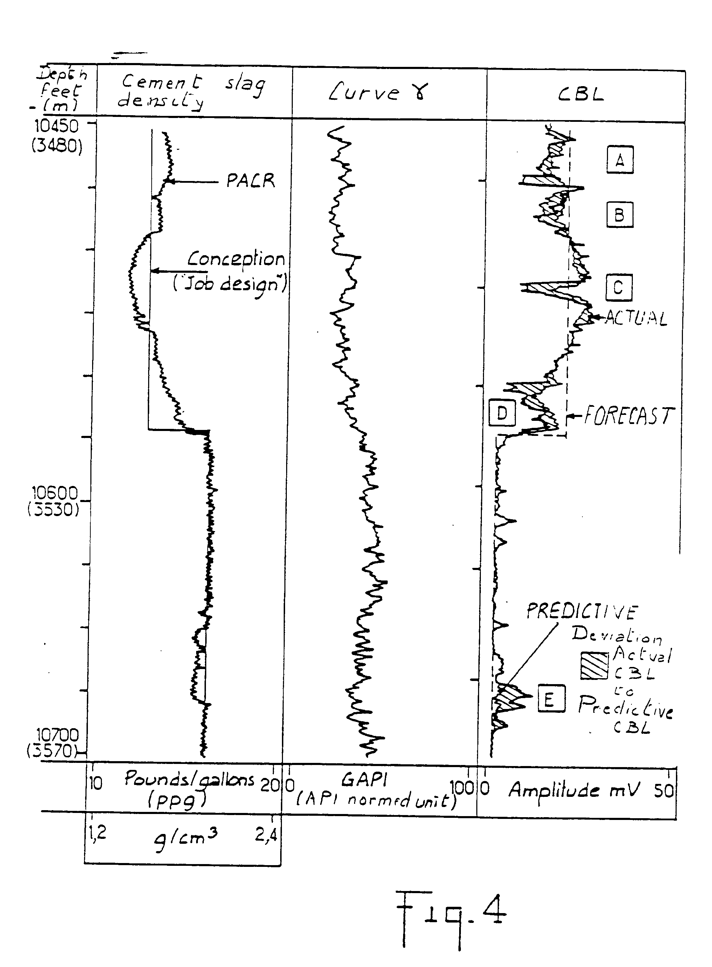

The whole of the operations are schematized in the appended figure 3.

Finally, the appended figure 4 represents a cementation operation report.

The density, curves reponse to $\gamma$ radiation and CBL, come from an actual cementation operation performed in 1986, except for the "predictive CBL" curve which recently was traced in laboratory by the above indicated process on the basis of the actual file data from 1986, and superimposed on the 1986 curves.

The $\gamma$ reponse curve was kept for simplicity, but it is not used here.

As for the predictive "CBL" curve, only the useful portions (zones A, B, C, D and E) appear to avoid overloading the "actual CBL" curve.

– "Conception" indicates the theoretical curve which should be followed during the cementation operation;

– "PACR" indicates the real time recorded curve by a data acquisition apparatus, during operation;

– $CBL_{actual}$ = CBL curve actually obtained by the bottom tool after the cementation operation;

– $CBL_{forecast}$ = theoretical CBL curve obtained from the conception data (prior art CBL);

– $CBL_{predictive}$ = theoretical "corrected" CBL curve, obtained by the method according to the invention.

It can be seen that the usual comparison of the "actual" CBL and of the "forecast" CBL manages to delimiting 5 zones A to E where the deviation between the two curves can be interpreted as a zone where the cementation requires a repair.

On the other hand, the comparison of the "predictive" CBL curve obtained according to the invention with the same "actual" CBL allows showing that, in fact, only the zone E can present a repair problem. This namely is the only zone where after the correction method according to the invention, a substantial deviation still exists between both $CBL_{actual}$ and $CBL_{predictive}$ curves.

## Claims

1. Process for predicting the performance quality of a bore hole annulus cementation operation in an oil, gas, water, geothermic, injection or production or the like bore hole, characterized in that :

a. the theoretical acoustic impedance $Z_c$ of the cement is computed as a function of the cementation conception (or "job design") parameters and date;

b. the difference $\Delta\rho$ between the theoretical cement slag density forcast at the time of the conception and the actual, real time measured, density, during cementation, is evaluated by a data acquisition apparatus;

c. a correlation between $\Delta\rho$ and $\Delta z$ is established, where $\Delta z$ represents the difference between $Z_c$ computed under a) and the actual cement value $Z_m$;

d. $Z_m$ is computed by $Z_m = Z_c + \Delta z$ where $\Delta z$ is computed by means of the correlation established under c);

e. a correlation is established between $\Delta\rho$ and the depth at a given point of the bore hole taking into account the known geometry of the bore hole and the real time recorded cementation parameters from the data acquisition apparatus;

f. by means of the correlation between $\Delta\rho$ and the depth, the correlation between $Z_m$ ("predictive" actual value) and the depth is established; this correlation in fact is a logging or "log" ("CBL") representing the theoretical quality of the cementation corrected as a function of the actual cementation parameters;

g. the "predictive" CBL obtained under f) is compared with an actual CBL log recorded by an appropriate bottom tool;

h. the zones, where the deviation between the "actual" CBL and the "predictive" CBL is sufficient to be interpreted as indicating a zone where a repair cementation might be necessary, are determined.

2. Process according to claim 1, characterized in that in step a) $Z_c$ is obtained by :

$$Z_c = K \times \rho_c \times \frac{X + a}{bX + c} \qquad (I)$$

where :

– K = f $(t_c, TT, T)$

where :

    $t_c$ = elapsed time since cementation

    TT = cement setting time

    T = temperature

– $\rho_c$ = cement density computed for the cementation operation process

– X = P x Y

where :

    P = porosity of the cement slag

    Y = cement slag volume obtained from a "bag" (about 43 kg, 94 pounds) of cement.

– a and c are constants established by approximation.

3. A process according to one of the claims 1 or 2, characterized in that the relationship $\Delta z = f(\Delta\rho)$ may be represented by two rectilinear segments.

**Patentansprüche**

1. Verfahren zur Vorhersage der Ausführungsqualität eines Bohrloch-Ringraum-Zementierungsvorgangs in einem Öl-, Gas-, Wasser-, geothermischen, Einspritz- oder Ausbring- oder dergleichen Bohrloch, dadurch gekennzeichnet, daß:

a) die theoretische akustische Impedanz $Z_c$ des Zements als eine Funktion der Zementierungs-Konzeptions- (Job-Design-) Parameter und der Zeit berechnet wird;

b) die Differenz $\Delta\rho$ zwischen der zur Zeit der Konzeptionierung vorhergesagten, theoretischen Zementschlackedichte und der tatsächlichen, in Echtzeit während der Zementierung gemessenen Dichte durch eine Datenerfassungsvorrichtung ausgewertet wird;

c) eine Beziehung zwischen $\Delta\rho$ und $\Delta z$ aufgestellt wird, wobei $\Delta z$ die Differenz zwischen dem unter a) berechneten $Z_c$ und dem tatsächlichen Zementwert $Z_m$ darstellt;

d) $Z_m$ durch $Z_m = Z_c + \Delta z$ berechnet wird, wobei $\Delta z$ mittels der unter c) aufgestellten Beziehung berechnet wird;

e) eine Beziehung aufgestellt wird zwischen $\Delta\rho$ und der Tiefe an einem gegebenen Punkt des Bohrlochs, wobei die bekannte Geometrie des Bohrlochs und die in Echtzeit von der Datenerfassungsvorrichtung aufgenommenen Zementierungsparameter berücksichtigt werden;

f) mittels der Beziehung zwischen $\Delta\rho$ und der Tiefe die Beziehung zwischen $Z_m$ ("vorausgesagter" tatsächlicher Wert) und der Tiefe aufgestellt wird; diese Beziehung ist in der Tat eine Datenaufstellung oder "log" ("CBL"), welche die als eine Funktion der tatsächlichen Zementierungsparameter korrigierte, theoretische Qualität der Zementierung darstellt;

g) die "vorhergesagte" unter f) erhaltene CBL mit einer tatsächlichen, mit einem geeigneten Meßgerät (Grund-Meßgerät, bottom-tool) aufgenommenen CBL log verglichen wird;

h) die Bereiche bestimmt werden, in welchen die Abweichung zwischen der "tatsächlichen" CBL und der "vorhergesagten" CBL ausreicht, um als einen Bereich anzeigend gedeutet zu werden, in dem eine Ausbesserungszementierung nötig sein könnte.

2. Verfahren nach Anspruch 1, dadurch gekennzeichnet, daß in Schritt a) $Z_c$ erhalten wird durch:

$$Z_c = K * \rho_c * \frac{X + a}{bX + c}$$

wobei:

– K = f(tc,TT,T)

wobei:

tc = seit der Zementierung vergangene Zeit

TT = Zement-Setz-Zeit

T = Temperatur

– $\rho_c$ = für das Zementierungsvorgang-Verfahren berechnete Zementdichte

– X = P * Y

wobei:

P = Porosität der Zementschlacke

Y = Zementschlackevolumen, das aus einem Zement- "Sack" (ungefähr 43 kg, 94 pounds) erhalten wird.

– a und c Konstanten sind, welche durch eine Annäherung aufgestellt werden.

3. Verfahren nach einem der Ansprüche 1 oder 2, **dadurch gekennzeichnet**, daß die Beziehung $\Delta z = f(\Delta\rho)$ durch zwei geradlinige Abschnitte dargestellt werden kann.

## Revendications

1. Procédé pour prédire la qualité de la performance d'une opération de cimentation d'une couronne circulaire d'un puits de pétrole, de gaz ou d'eau, d'un puits géothermique ou d'un puits analogue, caractérisé en ce que:

a. l'impédance acoustique théorique Zc du ciment est calculée en fonction des paramètres et de la date de conception de cimentation (ou "conception du travail");

b. la différence $\Delta\rho$ entre la densité théorique du laitier de ciment, prédite à l'instant de la conception, et la densité actuelle mesurée en temps réel, pendant la cimentation, est évaluée par un dispositif d'acquisition de données;

c. Une corrélation entre $\Delta\rho$ et $\Delta z$ est établie, $\Delta z$ représentant la différence entre Zc calculée en a) et la valeur actuelle Zm du ciment;

d. Zm est calculée selon Zm = Zc + $\Delta z$, $\Delta z$ étant calculée au moyen de la corrélation établie en c);

e. une corrélation est établie entre $\Delta\rho$ et la profondeur en un point donné du puits en tenant compte de la géométrie connue du puits et des paramètres de cimentation enregistrés en temps réel, délivrés par le dispositif d'acquisition de données;

f. au moyen de la corrélation entre $\Delta\rho$ et la profondeur, on établit la corrélation entre Zm (valeur actuelle "prédictive") et la profondeur;

cette corrélation est en réalité un enregistrement ou "journal" ("CBL") représentant la qualité théorique de la cimentation corrigée en fonction des paramètres actuels de cimentation;

g. l'enregistrement "prédictif" CBL obtenu en f) est comparé à un enregistrement CBL actuel enregistré au moyen d'un outil au fond, approprié;

h. les zones, entre lesquelles l'écart entre l'enregistrement CBL "actuel" et l'enregistrement CBL "prédictif" est suffisant pour être interprété comme étant une zone dans laquelle une cimentation de réparation peut être nécessaire, sont déterminées.

2. Procédé selon la revendication 1, caractérisé en ce que, lors de l'étape a), Zc est obtenue conformément à:

$$Zc - K \times \rho c \times \frac{X + a}{bX + c} \qquad \text{(I)}$$

avec :

– K = f (tc, TT, T)

avec

tc = intervalle de temps écoulé depuis la cimentation,

TT = temps de prise du ciment

T = température,

– $\rho c$ = densité du ciment calculée pour le processus de l'opération de cimentation,

– X = P x Y

avec :

P = porosité du laitier de ciment,

Y = volume du laitier de ciment obtenu à partir d'un "sac" de ciment (environ 43 kg, 94 livres)

– a et c sont des constantes établies par approximation.

3. Procédé selon l'une des revendications 1 ou 2, caractérisé en ce que la relation $\Delta z = f(\Delta\rho)$ peut être représentée par deux segments rectilignes.

Dyck North :cement type Dyckerhoff
            variety "North" (North Sea )

Cemoil :cement type Cemoil

Fig.1

$$\triangle Z = f(\triangle \rho)$$

Between 14 & 19 ppg
(slag density between 1,6 & 2,3 g/cm³)
- A 68°c (154°F) et 122°c (252°F)

◇ Dyck North 122°c (252°F)

○ Dyck North 68°c (154°F)

△ Cemoil 68°c (154°F)

□ Cemoil 122°c (252°F)
   After $t_c = 72h$

Fig.2

7

Fig. 3

Fig.4